# NEW EUROPEAN PATENT SPECIFICATION

(11) **EP 2 192 230 B2**
(45) Date of publication and mention of the opposition decision: **01.01.2020**
(45) Mention of the grant of the patent: 22.08.2012
(21) Application number: 08170098.1
(22) Date of filing: 27.11.2008
(51) Int. Cl.: D21H 21/30, B41M 5/52, C09D 11/00

(54) **Optical brightening compositions for high quality inkjet printing**
Optische Aufhellungszusammensetzungen für den Tintenstrahldruck mit hoher Qualität
Compositions d'azurage optique pour impression par jet d'encre de grande qualité

(43) Date of publication of application: 02.06.2010
(73) Proprietor: Clariant Finance (BVI) Limited, Road Town, Tortola (VG); International Paper Company, Loveland, OH 45140 (US)
(72) Inventor: Jackson, Andrew Clive, 4142 Münchenstein BL (CH); Klein Cédric, 67170 Brumath (FR); Puddiphatt David, 4203 Grellingen (CH); Skaggs, Benny, Springboro, OH Ohio 45066 (US)
(74) Representative: Ricker, Mathias

(56) References cited:
- EP-A- 1 355 004
- EP-A- 1 571 149
- EP-A- 1 712 677
- EP-A1- 0 860 437
- EP-A1- 1 378 545
- EP-A1- 1 612 209
- EP-A1- 1 624 105
- WO-A-03/044275
- WO-A-2007/053681
- WO-A1-02/060883
- WO-A1-2007/053681
- ES-A1- 2 189 619
- GB-A- 1 243 479
- US-A1- 2005 124 755
- US-A1- 2005 124 755
- US-A1- 2007 087 138
- US-A1- 2011 281 042
- US-A1- 2012 171 384
- US-B1- 6 207 258
- Petition for the Imposition of Antidumping Duties, Volume 1: Required Information, Material Injury, and Threat of Material Injury. Dated: March 31, 2011
- DATABASE Registry 16 November 1984 (1984-11-16), retrieved from STN Database accession no. 68971-49-3
- Käss W.: "Tracing Technique in Geohydrology", 1998, Gebrüder Borntraeger Verlagsbuchhandlung, Berlin/Stuttgart ISBN: 90 5410 444 9 page 50, 54,
- Sheahan Tim: "Print power players back ColorLok paper", Printweek, 25 January 2008 (2008-01-25),
- "ColorLok - the new Standard for Ink-Jet papers?", Paper Chemical Weblog, 27 February 2008 (2008-02-27),

## Description

The instant invention relates to liquid compositions comprising derivatives of diaminostilbene, binders and divalent metal salts for the optical brightening of substrates suitable for high quality ink jet printing.

### BACKGROUND OF THE INVENTION

Ink jet printing has in recent years become a very important means for recording data and images onto a paper sheet. Low costs, easy production of multicolour images and relatively high speed are some of the advantages of this technology. Ink jet printing does however place great demands on the substrate in order to meet the requirements of short drying time, high print density and sharpness, and reduced colour-to-colour bleed. Furthermore, the substrate should have a high brightness. Plain papers for example are poor at absorbing the water-based anionic dyes or pigments used in ink jet printing; the ink remains for a considerable time on the surface of the paper which allows diffusion of the ink to take place and leads to low print sharpness. One method of achieving a short drying time while providing high print density and sharpness is to use special silica-coated papers. Such papers however are expensive to produce.

US 6,207,258 provides a partial solution to this problem by disclosing that pigmented ink jet print quality can be improved by treating the substrate surface with an aqueous sizing medium containing a divalent metal salt. Calcium chloride and magnesium chloride are preferred divalent metal salts. The sizing medium may also contain other conventional paper additives used in treating uncoated paper. Included in conventional paper additives are optical brightening agents (OBAs) which are well known to improve considerably the whiteness of paper and thereby the contrast between the ink jet print and the background. US 6,207,258 offers no examples of the use of optical brightening agents with the invention.

WO 2007/044228 claims compositions including an alkenyl succinic anhydride sizing agent and/or an alkyl ketene dimmer sizing agent, and incorporating a metallic salt. No reference is made to the use of optical brightening agents with the invention.

WO 2008/048265 claims a recording sheet for printing comprising a substrate formed from ligno cellulosic fibres of which at least one surface is treated with a water soluble divalent metal salt. The recording sheet exhibits an enhanced image drying time. Optical brighteners are included in a list of optional components of a preferred surface treatment comprising calcium chloride and one or more starches. No examples are provided of the use of optical brighteners with the invention.

WO 2007/053681 describes a sizing composition that, when applied to an ink jet substrate, improves print density, colour-to-colour bleed, print sharpness and/or image dry time. The sizing composition comprises at least one pigment, preferably either precipitated or ground calcium carbonate, at least one binder, one example of which is a multicomponent system including starch and polyvinyl alcohol, at least one nitrogen containing organic species, preferably a polymer or copolymer of diallyldimethyl ammonium chloride (DADMAC), and at least one inorganic salt. The sizing composition may also contain at least one optical brightening agent, examples of which are Leucophor BCW and Leucophor FTS from Clariant.

The advantages of using a divalent metal salt, such as calcium chloride, in substrates intended for pigmented ink jet printing can only be fully realized when a compatible water-soluble optical brightener becomes available. It is well-known however that water-soluble optical brighteners are prone to precipitation in high calcium concentrations. (See, for example, page 50 in Tracing Technique in Geohydrology by Werner Käss and Horst Behrens, published by Taylor & Francis, 1998.)

Accordingly, there is a need for a water-soluble optical brightener which has good compatibility with sizing compositions containing a divalent metal salt.

### DESCRIPTION OF THE INVENTION

It has now been found that optical brighteners of formula (1) have surprisingly good compatibility with sizing compositions containing a divalent metal salt.

The present invention therefore provides a sizing composition for optical brightening of substrates according to claim 1.

Preferred compounds of formula (1) are those in which
- M and X: are identical or different and independently from each other selected from the group consisting of an alkali metal cation and trisubstituted C1-C4 linear or branched hydroxyalkyl radical, or mixtures of said compounds and
- n: is in the range from 0 to 6.

More preferred compounds of formula (1) are those in which
- M and X: are identical or different and independently from each other selected from the group consisting of Li, Na, K and trisubstituted C1-C3 linear or branched hydroxyalkyl radical, or mixtures of said compounds and
- n: is in the range from 0 to 6.

Especially preferred compounds of formula (1) are those in which
- M and X: are identical or different and independently from each other selected from the group consisting of Na, K and triethanolamine, or mixtures of said compounds and
- n: is in the range from 0 to 6.

The concentration of optical brightener in the sizing composition may be between 0.2 and 30 g/l, preferably between 1 and 15 g/l, most preferably between 2 and 12 g/l.

The binder is typically an enzymatically or chemically modified starch, e.g. oxidized starch, hydroxyethylated starch or acetylated starch. The starch may also be native starch, anionic starch, a cationic starch, or an amphipathic depending on the particular embodiment being practiced. While the starch source may be any, examples of starch sources include corn, wheat, potato, rice, tapioca, and sago. One or more secondary binders e.g. polyvinyl alcohol may also be used.

The concentration of binder in the sizing composition may be between 1 and 30% by weight, preferably between 2 and 20% by weight, most preferably between 5 and 15% by weight. Preferred divalent metal salts are selected from the group consisting of calcium chloride, magnesium chloride, calcium bromide, magnesium bromide, calcium iodide, magnesium iodide, calcium nitrate, magnesium nitrate, calcium formate, magnesium formate, calcium acetate, magnesium acetate, calcium sulphate, magnesium sulphate, calcium thiosulphate or magnesium thiosulphate or mixtures of said compounds.

More preferred divalent metal salts are selected from the group consisting of calcium chloride, magnesium chloride, calcium bromide, magnesium bromide, calcium sulphate, magnesium sulphate, calcium thiosulphate or magnesium thiosulphate or mixtures of said compounds.

Most preferred divalent metal salts are selected from the group consisting of calcium chloride or magnesium chloride or mixtures of said compounds.

The concentration of divalent metal salt in the sizing composition may be between 1 and 100 g/l, preferably between 2 and 75 g/l, most preferably between 5 and 50 g/l.

When the divalent metal salt is a mixture of a calcium salt and a magnesium salt, the amount of calcium salt may be in the range of 0.1 to 99.9%.

The pH value of the sizing composition is typically in the range of 5 - 13, preferably 6 - 11.

In addition to one or more binders, one or more divalent metal salts, one or more optical brighteners and water, the sizing composition may contain by-products formed during the preparation of the optical brightener as well as other conventional paper additives. Examples of such additives are carriers, defoamers, wax emulsions, dyes, inorganic salts, solubilizing aids, preservatives, complexing agents, surface sizing agents, cross-linkers, pigments, special resins etc.

In an additional aspect of the invention, the optical brightener may be pre-mixed with polyvinyl alcohol in order to boost the performance of the optical brightener in sizing compositions. The polyvinyl alcohol may have any hydrolysis level including from 60 to 99%. The optical brightener/polyvinyl alcohol mixture may contain any amount of optical brightener and polyvinyl alcohol. Examples of making optical brightener/polyvinyl alcohol mixtures can be found in WO 2008/017623.

The optical brightener/polyvinyl alcohol mixture may be an aqueous mixture.

The optical brightener/polyvinyl alcohol mixture may contain any amount of optical brightener including from 10 to 50% by weight of at least one optical brightener. Further, the optical brightener/polyvinyl alcohol mixture may contain any amount of polyvinyl alcohol including from 0.1 to 10% by weight of polyvinyl alcohol.

The sizing composition may be applied to the surface of a paper substrate by any surface treatment method known in the art. Examples of application methods include size-press applications, calendar size application, tub sizing, coating applications and spraying applications. (See, for example, pages 283-286 in Handbook for Pulp & Paper Technologists by G. A. Smook, 2nd Edition Angus Wilde Publications, 1992 and US 2007/0277950.) The preferred method of application is at the size-press such as puddle size press or rod-metered size press . A preformed sheet of paper is passed through a two-roll nip which is flooded with the sizing composition. The paper absorbs some of the composition, the remainder being removed in the nip.

The paper substrate contains a web of cellulose fibres which may be synthetic or sourced from any fibrous plant including woody and nonwoody sources. Preferably the cellulose fibres are sourced from hardwood and/or softwood. The fibres may be either virgin fibres or recycled fibres, or any combination of virgin and recycled fibres.

The cellulose fibres contained in the paper substrate may be modified by physical and/or chemical methods as described, for example, in Chapters 13 and 15 respectively in Handbook for Pulp & Paper Technologists by G. A. Smook, 2nd Edition Angus Wilde Publications, 1992. One example of a chemical modification of the cellulose fibre is the addition of an optical brightener as described, for example, in EP 884,312, EP 899,373, WO 02/055646, WO 2006/061399, WO 2007/017336, WO 2007/143182, US 2006-0185808, and US 2007-0193707 .

The sizing composition is prepared by adding the optical brightener (or optical brightener/polyvinyl alcohol mixture) and the divalent metal salt to a preformed aqueous solution of the binder at a temperature of between 20°C and 90°C. Preferably the divalent metal salt is added before the optical brightener (or optical brightener/polyvinyl alcohol mixture), and at a temperature of between 50°C and 70°C.

The paper substrate containing the sizing composition and of the present invention may have any ISO brightness, including ISO brightness that is at least 80, at least 90 and at least 95.

The paper substrate of the present invention may have any CIE Whiteness, including at least 130, at least 146, at least 150, and at least 156. The sizing composition has a tendency to enhance the CIE Whiteness of a sheet as compared to conventional sizing compositions containing similar levels of optical brighteners.

The sizing composition of the present invention has a decreased tendency to green a sheet to which it has been applied as compared to that of conventional sizing compositions containing comparable amounts of optical brighteners. Greening is a phenomenon related to saturation of the sheet such that a sheet does not increase in whiteness even as the amount of optical brightener is increased. The tendency to green is measured is indicated by from the a*-b* diagram, a* and b* being the colour coordinates in the CIE Lab system. Accordingly, the sizing composition of the present invention affords the user the ability to efficiently increase optical brightener concentrations on the paper in the presence of a divalent metal ion without reaching saturation, while at the same time maintaining or enhancing the CIE Whiteness and ISO Brightness of the paper.

While the paper substrates of the present invention show enhanced properties suitable for inkjet printing, the substrates may also be used for multi-purpose and laserjet printing as well. These applications may include those requiring cut-size paper substrates, as well as paper roll substrates.

The paper substrate of the present invention may contain an image. The image may be formed on the substrate with any substance including dye, pigment and toner.

Once the image is formed on the substrate, the print density may be any optical print density including an optical print density that is at least 1.0, at least 1.2, at least 1.4, at least 1.6. Methods of measuring optical print density can be found in EP 1775141.

The preparation of a compound of formula (1) in which M=Na and n=6 has been described previously in WO 02/060883 and WO 02/077106. No examples have been provided of the preparation of a compound of formula (1) in which M≠X and n<6.

The compounds of formula (1) are prepared by stepwise reaction of a cyanuric halide with
a) an amine of formula 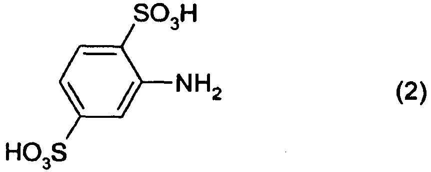 in the free acid, partial- or full salt form,
(b) a diamine of formula 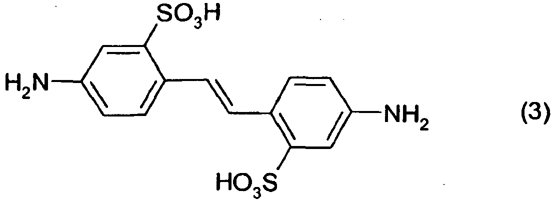 in the free acid, partial- or full salt form,
   and
c) diisopropanolamine of formula

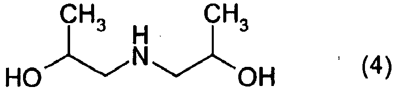

As a cyanuric halide there may be employed the fluoride, chloride or bromide. Cyanuric chloride is preferred.

Each reaction may be carried out in an aqueous medium, the cyanuric halide being suspended in water, or in an aqueous/organic medium, the cyanuric halide being dissolved in a solvent such as acetone. Each amine may be introduced without dilution, or in the form of an aqueous solution or suspension. The amines can be reacted in any order, although it is preferred to react the aromatic amines first. Each amine may be reacted stoichiometrically, or in excess. Typically, the aromatic amines are reacted stoichimetrically, or in slight excess; diisopropanolamine is generally employed in an excess of 5-30% over stoichiometry.

For substitution of the first halogen of the cyanuric halide, it is preferred to operate at a temperature in the range of 0 to 20°C, and under acidic to neutral pH conditions, preferably in the pH range of 2 to 7. For substitution of the second halogen of the cyanuric halide, it is preferred to operate at a temperature in the range of 20 to 60°C, and under weakly acidic to weakly alkaline conditions, preferably at a pH in the range of 4 to 8. For substitution of the third halogen of the cyanuric halide, it is preferred to operate at a temperature in the range of 60 to 102°C, and under weakly acidic to alkaline conditions, preferably at a pH in the range of 7 to 10.

The pH of each reaction is generally controlled by addition of a suitable base, the choice of base being dictated by the desired product composition. Preferred bases are, for example, alkali metal (e.g., lithium, sodium or potassium) hydroxides, carbonates or bicarbonates, or aliphatic tertiary amines e.g. triethanolamine or triisopropanolamine. Where a combination of two or more different bases is used, the bases may be added in any order, or at the same time.

Where it is necessary to adjust the reaction pH using acid, examples of acids that may be used include hydrochloric acid, sulphuric acid, formic acid and acetic acid.

Aqueous solutions containing one or more compounds of general formula (1) may optionally be desalinated either by membrane filtration or by a sequence of precipitation followed by solution using an appropriate base.

The preferred membrane filtration process is that of ultrafiltration using, e.g., polysulphone, polyvinylidenefluoride, cellulose acetate or thin-film membranes.

### EXAMPLES

The following examples shall demonstrate the instant invention in more details. If not indicated otherwise, "parts" means "parts by weight" and "%" means "% by weight".

### Example 1

**Stage 1** : 31.4 parts of aniline-2,5-disulphonic acid monosodium salt are added to 150 parts of water and dissolved with the aid of an approx. 30 % sodium hydroxide solution at approx. 25°C and a pH value of approx. 8-9. The obtained solution is added over a period of approx. 30 minutes to 18.8 parts of cyanuric chloride dispersed in 30 parts of water, 70 parts of ice and 0.1 part of an antifoaming agent. The temperature is kept below 5°C using an ice/water bath and if necessary by adding ice into the reaction mixture. The pH is maintained at approx. 4-5 using an approx. 20% sodium carbonate solution. At the end of the addition, the pH is increased to approx. 6 using an approx. 20% sodium carbonate solution and stirring is continued at approx. 0-5°C until completion of the reaction (3-4 hours).

**Stage 2** : 8.8 parts of sodium bicarbonate are added to the reaction mixture. An aqueous solution, obtained by dissolving under nitrogen 18.5 parts of 4,4'-diaminostilbene-2,2'-disulphonic acid in 80 parts of water with the aid of an approx. 30% sodium hydroxide solution at approx. 45-50°C and a pH value of approx. 8-9, is dropped into the reaction mixture. The resulting mixture is heated at approx. 45-50°C until completion of the reaction (3-4 hours).

**Stage 3** : 17.7 parts of Diisopropanolamine are then added and the temperature is gradually raised to approx. 85-90°C and maintained at this temperature until completion of the reaction (2-3 hours) while keeping the pH at approx. 8-9 using an approx. 30% sodium hydroxide solution. The temperature is then decreased to 50°C and the reaction mixture is filtered and cooled down to room temperature. The solution is adjusted to strength to give an aqueous solution of a compound of formula (1) in which M = X = Na and n = 6 (0.125 mol/kg, 17.8%).

### Example 2

An aqueous solution of a compound of formula (1) in which M = Na, X = K and 4.5 ≤ n ≤ 5.5 (0.125mol/kg, approx. 18.0%) is obtained following the same procedure as in Example 1 with the sole difference that an approx. 30% potassium hydroxide solution is used instead of an approx. 30% sodium hydroxide solution in Stage 3.

### Example 3

An aqueous solution of a compound of formula (1) in which M = Na, X = K and 2.5 ≤ n ≤ 4.5 (0.125 mol/kg, approx. 18.3%) is obtained following the same procedure as in Example 1 with the sole differences that 10 parts of potassium bicarbonate are used instead of 8.8 parts of sodium bicarbonate in Stage 2 and an approx. 30% potassium hydroxide solution is used instead of an approx. 30% sodium hydroxide solution in Stages 2 and 3.

### Example 4

An aqueous solution of a compound of formula (1) in which M = Na, X = K and 0 ≤ n ≤ .5 (0.125 mol/kg, approx. 18.8%) is obtained following the same procedure as in Example 1 with the sole differences that an approx. 30% potassium hydroxide solution is used in place of an approx. 30% sodium hydroxide solution in Stages 1, 2 and 3, an approx. 20% potassium carbonate solution is used instead of an approx. 20% sodium carbonate solution in Stage 1, and 10 parts of potassium bicarbonate are used instead of 8.8 parts of sodium bicarbonate in Stage 2.

### Example 5

An aqueous solution of a compound of formula (1) in which M = Na, X = Li and 4.5 ≤ n ≤ 5.9 (0.125 mol/kg, approx. 17.7%) is obtained following the same procedure as in Example 1 with the sole difference that an approx. 10% lithium hydroxide solution is used instead of an approx. 30% sodium hydroxide solution in Stage 3.

### Example 6

An aqueous solution of a compound of formula (1) in which M = Na, X = Li and 2.5 ≤ n ≤ 4.5 (0.125 mol/kg, approx. 17.3%) is obtained following the same procedure as in Example 1 with the sole differences that 3.7 parts of lithium carbonate are used instead of 8.8 parts of sodium bicarbonate in Stage 2 and an approx. 10% lithium hydroxide solution is used instead of an approx. 30% sodium hydroxide solution in Stages 2 and 3.

### Example 7

A compound of formula (1) in which M = H is isolated by precipitation with concentrated hydrochloric acid of the concentrated solution of the compound of formula (1) obtained in Example 1, followed by filtration. The presscake is then dissolved in an aqueous solution of 7 equivalents of triethanolamine to give an aqueous solution of a compound of formula (1) in which M = Na, X = triethanolammonium and 1 ≤ n ≤ 3 (0.125 mol/kg, approx. 24.2%).

### Example 8

Optical brightening solution 8 is produced by stirring together
- an aqueous solution containing compound of formula (1) in which M=Na, X=K and 0 ≤ n ≤ 2.5 prepared according to example 4,
- a polyvinyl alcohol having a degree of hydrolysis of 85% and a Brookfield viscosity of 3.4-4.0 mPa.s and
- water
while heating to 90-95°C, until a clear solution is obtained that remains stable after cooling to room temperature.

The parts of each component are selected in order to get a final aqueous solution 8 comprising a compound of formula (1) in which M=Na, X=K and 0 ≤ n ≤ 2.5 prepared according to example 4 at a concentration of 0.125mol/kg and 2.5% of a polyvinyl alcohol having a degree of hydrolysis of 85% and a Brookfield viscosity of 3.4-4.0 mPa.s. The pH of solution 8 is in the range 8-9.

### Application Examples 1 to 8

Sizing compositions are prepared by adding an aqueous solution of a compound of formula (1) prepared according to Examples 1 to 8 at a range of concentrations from 0 to 50 g/l (from 0 to approx. 12.5 g/l of optical brightener) to a stirred, aqueous solution of calcium chloride (35 g/l) and an anionic starch (50 g/l) (Penford Starch 260) at 60°C. The sizing solution is allowed to cool, then poured between the moving rollers of a laboratory size-press and applied to a commercial 75 g/m² AKD (alkyl ketene dimer) sized, bleached paper base sheet. The treated paper is dried for 5 minutes at 70°C in a flat bed drier.

The dried paper is allowed to condition, and then measured for CIE whiteness on a calibrated Auto Elrepho spectrophotometer. The results are shown in Table 1.

### Comparative Example 1

Sizing compositions are prepared by adding an aqueous solution of Leucophor BCW from Clariant at a range of concentrations from 0 to 50 g/l (from 0 to approx. 12.5 g/l of optical brightener) to a stirred, aqueous solution of calcium chloride (35 g/l) and an anionic starch (50 g/l) (Penford Starch 260) at 60°C. The sizing solution is allowed to cool, then poured between the moving rollers of a laboratory size-press and applied to a commercial 75 g/m² AKD (alkyl ketene dimer) sized, bleached paper base sheet. The treated paper is dried for 5 minutes at 70 °C in a flat bed drier.

The dried paper is allowed to condition, and then measured for CIE whiteness on a calibrated Auto Elrepho spectrophotometer. The results are shown in Table 1.

**Table 1**

| | CIE Whiteness | | | | | | | | |
|---|---|---|---|---|---|---|---|---|---|
| Conc. g/l | Application example | | | | | | | | Comparative example |
| | 1 | 2 | 3 | 4 | 5 | 6 | 7 | 8 | 1 |
| 0 | 103.7 | 103.7 | 103.7 | 103.7 | 103.7 | 103.7 | 103.7 | 103.7 | 103.7 |
| 20 | 130.3 | 131.4 | 131.7 | 131.9 | 131.4 | 131.7 | 132.0 | 132.2 | 129.0 |
| 30 | 134.7 | 135.0 | 135.4 | 135.8 | 134.7 | 135.1 | 135.9 | 136.5 | 132.5 |
| 40 | 137.3 | 137.8 | 138.0 | 138.3 | 137.1 | 137.2 | 138.5 | 139.8 | 134.6 |
| 50 | 140.3 | 140.7 | 141.2 | 141.7 | 139.8 | 140.4 | 142.0 | 143.0 | 138.0 |

The results in Table 1 clearly demonstrate the excellent whitening effect afforded by the compositions of the invention.

Printability evaluation was done with a black pigment ink applied to the paper using a draw down rod and allowed to dry.

Optical density was measured using an Ihara Optical Densitometer R710. The results are shown in Table 2.

**Table 2**

| | | Optical Density |
|---|---|---|
| Paper sheet treated according to application example | 2 | 1.02 |
| | 4 | 1.12 |
| | 7 | 1.06 |
| Paper sheet treated according to comparative example | 1 | 1.02 |
| Optical Density = log₁₀ 1/R | | Where R = Reflectance |

The results in Table 2 show that the composition of the invention has no adverse effect on ink print density.

## Claims

1. Sizing composition for optical brightening of substrates for ink jet printing comprising
(a) at least one binder,
(b) at least one divalent metal salt,
(c) water, and
(d) at least one optical brightener of formula (1) 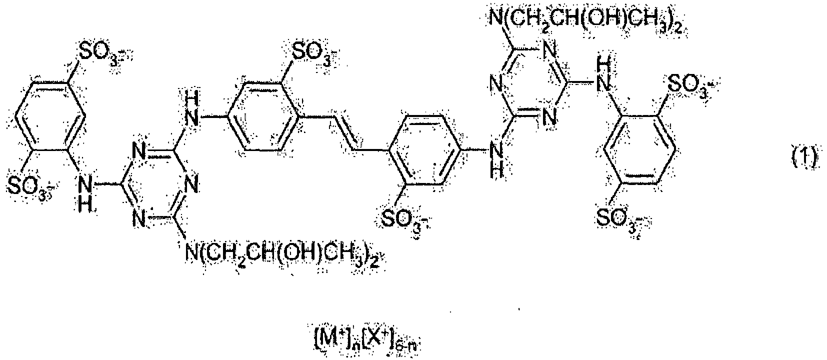 in which
M and X are identical or different and independently from each other selected from the group consisting of hydrogen, an alkali metal cation, ammonium, ammonium which is mono-, di- or trisubstituted by a C1-C4 linear or branched alkyl radical, ammonium which is mono-, di- or trisubstituted by a C1-C4 linear or branched hydroxyalkyl radical, or mixtures of said compounds, and
n is in the range from 0 to 6, **characterized in that** said divalent metal salt(s) are selected from the group consisting of calcium chloride, magnesium chloride, calcium bromide, magnesium bromide, calcium iodide, magnesium iodide, calcium nitrate, magnesium nitrate, calcium formate, magnesium formate, calcium acetate, magnesium acetate, calcium sulphate, magnesium sulphate, calcium thiosulphate or magnesium thiosulphate or mixtures of said compounds,
wherein the concentration of divalent metal salt in the sizing composition is between 1 and 100 g/l.

2. Composition according to claim 1 wherein
M and X are identical or different and independently from each other selected from the group consisting of Na, K and triethanolamine, or mixtures of said compounds, and
n is in the range from 0 to 6.

3. Composition according to claim 1 wherein the divalent metal salts are calcium chloride or magnesium chloride or mixtures of said compounds.

4. Composition according to claim 1 wherein the concentration of divalent metal salt in the sizing composition is between 5 and 50 g/l.

5. Composition according to claim 1 wherein the concentration of the optical brightener in the sizing composition is between 2 and 12 g/l.

6. Composition according to claim 1 wherein the sizing composition additionally contains by products formed during the preparation of the optical brightener as well as other conventional paper additives which are carriers, defoamers, wax emulsions, dyes, inorganic salts, solubilizing aids, preservatives, complexing agents, surface sizing agents, cross-linkers, pigments, or special resins.

7. Composition according to claim 1 wherein the sizing composition additionally contains polyvinyl alcohol.

8. Process for preparing a sizing composition according to any of claims 1 to 7 wherein the optical brightener solution and the divalent metal salt are added to a preformed aqueous solution of the binder at a temperature of between 20°C and 90°C.

9. A paper substrate, comprising
a web of cellulose fibers; and
a sizing composition according to any of claims 1 to 7.

10. Process for preparing a brightened paper **characterized in that** the surface of the paper is treated with a sizing composition according to any of claims 1 to 7.

11. A process for providing an image on a paper substrate, comprising printing an image with an ink, pigment, or toner on a paper substrate comprising a web of cellulose fibers and a sizing composition according to any of claims 1 to 7.

## Patentansprüche

1. Leimungszusammensetzung zum optischen Aufhellen von Substraten für den Tintenstrahldruck, umfassend
(a) mindestens ein Bindemittel,
(b) mindestens ein zweiwertiges Metallsalz,
(c) Wasser und
(d) mindestens einen optischen Aufheller der Formel (1) 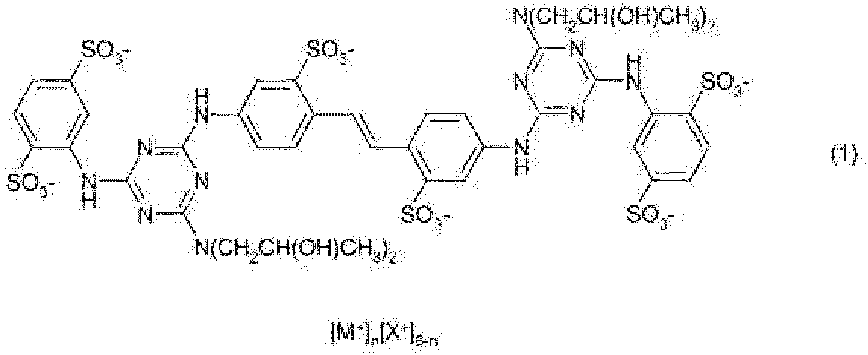 worin
M und X gleich oder verschieden sind und unabhängig voneinander aus der Gruppe bestehend aus Wasserstoff, einem Alkalimetallkation, Ammonium, Ammonium, das ein-, zwei- oder dreifach durch einen linearen oder verzweigten C1-C4-Alkylrest substituiert ist, Ammonium, das ein-, zwei- oder dreifach durch einen linearen oder verzweigten C1-C4-Hydroxyalkylrest substituiert ist, oder Mischungen der Verbindungen ausgewählt sind und
n im Bereich von 0 bis 6 liegt,
**dadurch gekennzeichnet, dass** das zweiwertige Metallsalz bzw. die zweiwertigen Metallsalze aus der Gruppe bestehend aus Calciumchlorid, Magnesiumchlorid, Calciumbromid, Magnesiumbromid, Calciumiodid, Magnesiumiodid, Calciumnitrat, Magnesiumnitrat, Calciumformiat, Magnesiumformiat, Calciumacetat, Magnesiumacetat, Calciumsulfat, Magnesiumsulfat, Calciumthiosulfat oder Magnesiumthiosulfat oder Mischungen der Verbindungen ausgewählt ist bzw. sind,
wobei die Konzentration von zweiwertigem Metallsalz in der Leimungszusammensetzung zwischen 1 und 100 g/l liegt.

2. Zusammensetzung nach Anspruch 1, wobei
M und X gleich oder verschieden sind und unabhängig voneinander aus der Gruppe bestehend aus Na, K und Triethanolamin oder Mischungen der Verbindungen ausgewählt sind und
n im Bereich von 0 bis 6 liegt.

3. Zusammensetzung nach Anspruch 1, wobei es sich bei den zweiwertigen Metallsalzen um Calciumchlorid oder Magnesiumchlorid oder Mischungen der Verbindungen handelt.

4. Zusammensetzung nach Anspruch 1, wobei die Konzentration von zweiwertigem Metallsalz in der Leimungszusammensetzung zwischen 5 und 50 g/l liegt.

5. Zusammensetzung nach Anspruch 1, wobei die Konzentration des optischen Aufhellers in der Leimungszusammensetzung zwischen 2 und 12 g/l liegt.

6. Zusammensetzung nach Anspruch 1, wobei die Leimungszusammensetzung ferner bei der Herstellung des optischen Aufhellers gebildete Nebenprodukte sowie andere herkömmliche Papieradditive, bei denen es sich um Träger, Entschäumer, Wachsemulsionen, Farbstoffe, anorganische Salze, Lösungsvermittler, Konservierungsstoffe, Komplexbildner, Oberflächenleimungsmittel, Vernetzer, Pigmente oder Spezialharze handelt, enthält.

7. Zusammensetzung nach Anspruch 1, wobei die Leimungszusammensetzung ferner Polyvinylalkohol enthält.

8. Verfahren zur Herstellung einer Leimungszusammensetzung nach einem der Ansprüche 1 bis 7, bei dem man die Lösung von optischem Aufheller und das zweiwertige Metallsalz bei einer Temperatur zwischen 20°C und 90°C zu einer vorgebildeten wässrigen Lösung des Bindemittels gibt.

9. Papiersubstrat, umfassend ein Vlies von Cellulosefasern und eine Leimungszusammensetzung nach einem der Ansprüche 1 bis 7.

10. Verfahren zur Herstellung eines aufgehellten Papiers, **dadurch gekennzeichnet, dass** man die Oberfläche des Papiers mit einer Leimungszusammensetzung nach einem der Ansprüche 1 bis 7 behandelt.

11. Verfahren zur Bereitstellung eines Bilds auf einem Papiersubstrat, bei dem man auf ein Papiersubstrat, das ein Vlies von Cellulosefasern und eine Leimungszusammensetzung nach einem der Ansprüche 1 bis 7 umfasst, mit einer Tinte, einem Pigment oder einem Toner ein Bild aufdruckt.

## Revendications

1. Composition d'apprêtage pour l'azurage optique de substrats pour impression par jet d'encre comprenant
(a) au moins un liant,
(b) au moins un sel de métal divalent,
(c) de l'eau, et
(d) au moins un azurant optique de formule (1) 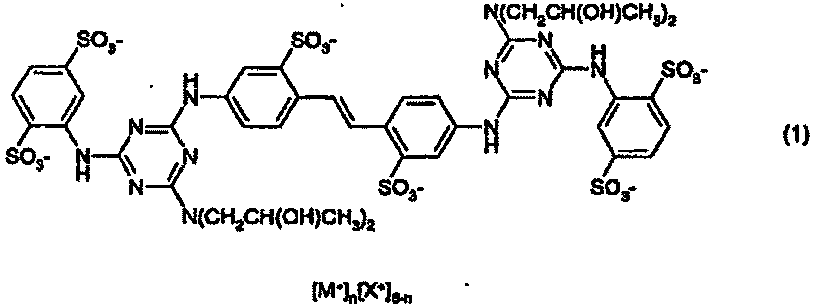 dans laquelle
M et X sont identiques ou différents et, indépendamment l'un de l'autre, choisis dans le groupe constitué par l'hydrogène, un cation de métal alcalin, l'ammonium, un ammonium qui est mono-, di- ou trisubstitué par un radical alkyle en C1-C4 linéaire ou ramifié, un ammonium qui est mono-, di- ou trisubstitué par un radical hydroxyalkyle en C1-C4 linéaire ou ramifié, et les mélanges desdits composés, et n se situe dans la gamme de 0 à 6,
**caractérisée en ce que** ledit ou lesdits sels de métal divalent sont choisis dans le groupe constitué par le chlorure de calcium, le chlorure de magnésium, le bromure de calcium, le bromure de magnésium, l'iodure de calcium, l'iodure de magnésium, le nitrate de calcium, le nitrate de magnésium, le formate de calcium, le formate de magnésium, l'acétate de calcium, l'acétate de magnésium, le sulfate de calcium, le sulfate de magnésium, le thiosulfate de calcium, le thiosulfate de magnésium, et les mélanges desdits composés,
dans laquelle la concentration en sel de métal divalent dans la composition d'apprêtage est comprise entre 1 et 100g/l.

2. Composition selon la revendication 1 dans laquelle M et X sont identiques ou différents et, indépendamment l'un de l'autre, choisis dans le groupe constitué par Na, K, la triéthanolamine, et les mélanges desdits composés, et n se situe dans la gamme de 0 à 6.

3. Composition selon la revendication 1 dans laquelle les sels de métal divalent sont le chlorure de calcium ou le chlorure de magnésium ou un mélange desdits composés.

4. Composition selon la revendication 1 dans laquelle la concentration de sel de métal divalent dans la composition d'apprêtage se situe entre 5 et 50 g/l.

5. Composition selon la revendication 1 dans laquelle la concentration de l'azurant optique dans la composition d'apprêtage se situe entre 2 et 12 g/l.

6. Composition selon la revendication 1, la composition d'apprêtage contenant également des sous-produits formés lors de la préparation de l'azurant optique ainsi que d'autres additifs conventionnels du papier qui sont des supports, des agents antimousse, des émulsions de cire, des colorants, des sels inorganiques, des adjuvants de solubilisation, des conservateurs, des agents complexants, des agents d'apprêtage de surface, des agents de réticulation, des pigments, ou des résines spéciales.

7. Composition selon la revendication 1, la composition d'apprêtage contenant également de l'alcool polyvinylique.

8. Procédé de préparation d'une composition d'apprêtage selon l'une quelconque des revendications 1 à 7 dans lequel la solution d'azurant optique et le sel de métal divalent sont ajoutés à une solution aqueuse préformée du liant à une température comprise entre 20 °C et 90 °C.

9. Substrat de papier, comprenant
une bande de fibres de cellulose ; et
une composition d'apprêtage selon l'une quelconque des revendications 1 à 7.

10. Procédé de préparation d'un papier azuré **caractérisé en ce que** la surface du papier est traitée avec une composition d'apprêtage selon l'une quelconque des revendications 1 à 7.

11. Procédé d'obtention d'une image sur un substrat de papier, comprenant l'impression d'une image avec une encre, un pigment ou un toner sur un substrat de papier comprenant une bande de fibres de cellulose et une composition d'apprêtage selon l'une quelconque des revendications 1 à 7.
